# EUROPEAN PATENT SPECIFICATION

(11) **EP 1 300 809 B1**
(45) Date of publication and mention of the grant of the patent: **31.12.2008**
(21) Application number: 02078831.1
(22) Date of filing: 16.09.2002
(51) Int. Cl.: G08G 1/0967, G08G 1/123, G07C 5/00, G01S 5/00

(54) **Service mediator system for vehicles and vehicle users in a traffic network**
System zur Vermittlung von Diensten für Fahrzeugen und Fahrzeugbenutzer in einem Verkehrsnetzwerk
Système de fournisseurs de service pour véhicules et les utilisateurs d'un véhicule dans un réseau de trafic

(30) Priority: 17.09.2001 EP 01203515; 26.09.2001 NL 1019038
(43) Date of publication of application: 09.04.2003
(73) Proprietor: Koninklijke KPN N.V., 9726 AE Groningen (NL)
(72) Inventor: Schmidt, Johan Richard, 2317 NC Leiden (NL); Van Den Berg, Wim, 2831 VR Gouderak (NL)
(74) Representative: Wuyts, Koenraad Maria

(56) References cited:
- EP-A- 0 887 782
- WO-A-00/28410
- WO-A-00/42556
- WO-A-98/04080
- DE-A- 4 112 472
- DE-A- 19 821 585
- GB-A- 2 288 892
- US-A- 5 485 161
- US-A- 5 694 322
- US-A- 6 021 371
- US-A- 6 070 123
- GNEITING S: "WAP-ANGEBOTE PER HANDY" FUNKSCHAU, FRANZIS-VERLAG K.G. MUNCHEN, DE, vol. 72, no. 8, 1 April 1999 (1999-04-01), pages 28-32, XP000896767 ISSN: 0016-2841

## Description

### FIELD OF THE INVENTION

The present invention relates to a service mediator system intended for service provisioning to vehicles and vehicle users in a traffic network.

### BACKGROUND OF THE INVENTION

Car traffic nowadays is subject to increasing society concern due to problems such as environment polution and traffic congestion. Suggested and implemented measures comprise tax and technological measures.

### SUMMARY OF THE INVENTION

It is an aim of the present invention to provide a framework for enhanced allocation and mutual tuning of different mobility resources like public and private transportation services, road and parking capacity, traffic routing, route information, and accounting and billing. One of the aspects of the present invention is that all participating vehicles comprise local communication means, enabled to communicate, via a communication network, with a service mediator system, enabled to link said local communication means to various servers, via e.g. an (IP based) server network like the internet.

In an embodiment of the invention, each vehicle contains a "car box" which is enabled to communicate -via mobile communication protocols such as GSM, GPRS or UMTS- with a central or distributed mediator system. Said mediator system serves as a central connection point for all kinds of services -enabled by various servers- relevant for traffic control, vehicle control and for user services like maintenance, accounting and billing of taxes, insurance fees etc, and for (business and private) communications.

The local communication means (the "car box") may comprise means for exchanging data between the vehicles' software or hardware, while at least one of said servers comprises means for processing said data related to the vehicles' software or hardware. For instance one of said servers may register the vehicles' fuel consumption and advise the car driver about the distance and the way to a fuel pump. More sophisticated may be the option that one of said servers comprises means for registering the vehicles' maintenance state and notifying the driver to visit a maintenance or repair workshop. More options in the domain of monitoring the hardware or software of vehicles are possible.

The local communication means may also comprise vehicle location means, enabled for exchanging data relative to the vehicles' location, while at least one of said servers comprises means for processing said location data. This also is a domain which opens many sophisticated services, for instance based on registering, in one of said servers, the vehicles' locations.

At least one of said servers may comprise means for planning and scheduling the use of the vehicles. This option may for instance enable sophicated "just-in-time" car leasing (instead of present permanent car leasing practice).

At least one of said servers may comprise means for dynamic (self-adapting to changes in traffic streams and capacity fluctuations) route planning.

At least one of said servers may comprise means for sophisticated billing or taxing for the use of the vehicles, for instance dependent on vehicle (engine) characteristics, fuel consumption, location, speed, time-of-the-day, etc. At least one of said servers may comprise means for billing vehicle related insurance.

Said local communication means may comprise means for the exchange of voice or data with the vehicles' "users" (users, drivers), while at least one of said servers comprises means for processing said voice or data from and to the vehicles' users. This option enables professional or private communication between the vehicles' users mutually and with the rest of the world.

At least one of said servers may be enabled to process requests for vehicle parking.

At least part of the vehicles (busses etc.) may belong to a public transportation system; information about said transportation system may be exchanged with users of vehicles not belonging to the public transportation system. This option enables gearing of the private vehicles to the public transportation system.

At least one of said servers may be enabled to process orders from the vehicles' users referring to hiring transportation room or transportation means.

At least one of said servers may be enabled for automatic processing vehicle accidents, enabling sophisticated dynamic planning of rescue capacity etc.

The following notes may be made referring to the function and architecture of the mediator system:

The mediator system may have the function of a gateway between the mobile telecommunication network (e.g. GSM, GPRS, UMTS) and the various servers (via e.g. the internet).

The mediator may also have the function of a proxyserver used for caching and/or security purposes.

The mediator system may also have a portal function, via which the services suppied by the various servers may be organized, displayed and e.g. billed. Such a portal may also be "personalized", that is, each user may set, within the portal environment, user preferences etc. like preferred (traffic) news, music channel etc. Also a traffic network administrator may be enabled, by such a portal/mediator, to receive information about the drivers' preferences, traffic behaviour etc.

The mediator may also be enabled to supply peer-to-peer communication between car drivers which are within the same traffic area, thus enabling "local car chat" or "local car broadcasting", which might be valuable in case of emergency, fog etc. The mediator thus may prevent that local peer-to-peer messages take relative many resources of the internet and the servers linked via the internet. Besides, the mediator system may comprise means to set-up, via the car boxes of adjacent cars, local ad-hoc networks e.g. based on IEEE 802.11 (Wireless LAN) or Bluetooth standards.

Moreover, the mediator may be enabled to urge local car boxes to set-up a link to an information transmitting system, as e.g. proposed in applicant's WO9935629, describing an information system for a traffic network. Information is transmitted by, said information transmitting system, to data receivers (car boxes) in vehicles. The traffic network is broken down into information regions characterised by region-identification codes which may be set using local beacon transmitters, but which, as indicated above, alternatively may be set by means of the mediator system.

The mediator system may be used by several different communication operators, e.g. via different communication networks. In other words, the mediator system may serve several different operators and may preferrably be enabled to "hand-over" between different communication networks.

The mediator system may support, in addition to conventional (internet related) protocols, the "Wireless Application Protocol" (WAP) and/or the "I-mode" protocol. Both protocols are fit to enable mobile communication terminals (including the "car boxes") to be used as internet terminal. The mediator may be able to detect, e.g. from the car box's ID or by analyzing the format of the received data ("parsing"), and to apply the right terminal protocol.

Finally, it is noted that an important function of the mediator system may be the fact that the IP data streams can be optimally adapted to the fanciful behaviour of mobile radio channels. For instance, short radio breaks may be considered, by the IP network, as data congestion, causing the TCP network control means to react with a "slow start", resulting relative mean transmission speeds.

### FIGURES

Figure 1 shows an exemplary architecture of the system according to the invention.

Figure 2 shows an exemplary embodiment for "remote traffic speed control".

### EXEMPLARY EMBODIMENTS

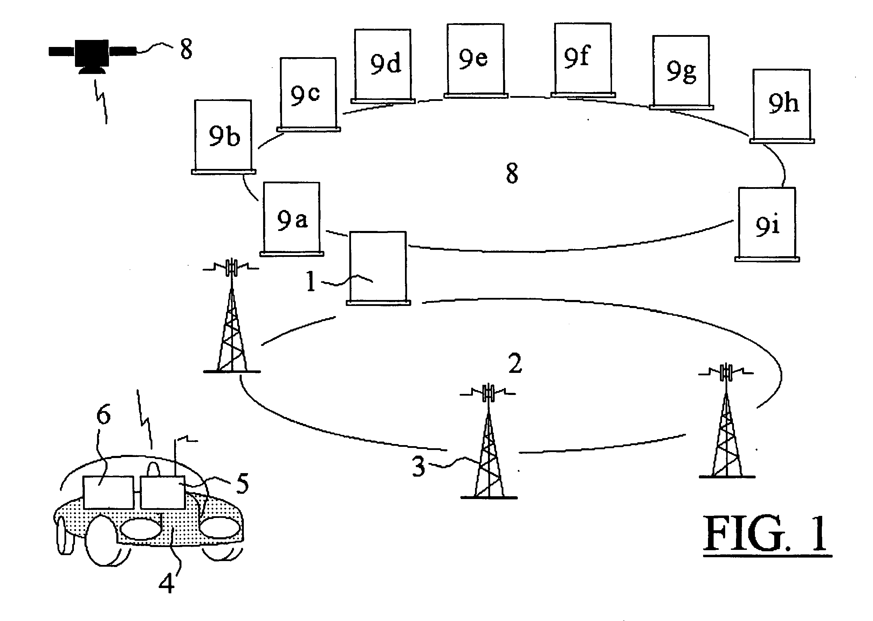

Figure 1 shows a schematic exemplary embodiment of the present invention. Shown is a mediator 1 which is -at one side- connected to a communication system 2, comprising base stations 3, thus being able to exchange data or voice with a vehicle 4, via a vehicle's communication module 5 ("car box"), which is enabled to communicate with the car's users by means of an interface not shown or, via a vehicle control system 6, with the vehicle's hardware -the engine etc., via sensors and actuators- or control software. Communication module 5 may also be able to communicate with a satellite 7 for communication or localisation purposes.

Mediator 1 is -at the other side, via an IP-based computer service network (internet) 8- connected to several traffic or vehicle related servers 9a...i.

Each vehicle 4 is enabled by module 5 to communicate via the communication system 2 -GSM, GPRS, UMTS- if desired via the internet-with mediator system 1. Mediator 1 serves as a central connection point for all kinds of services -enabled by various servers 9a...i-relevant for traffic control, vehicle control and maintenance, accounting and billing related to the usage of the vehicles (taxes, insurance fees), as well as business and private communications.

The local communication module 5 (the "car box") comprises means for exchanging -via the vehicle control system 6- data between the vehicles' software or hardware and server 9a, comprising means for processing said data related to the vehicles' software or hardware. For instance server 9a may register the vehicles' fuel consumption and advise the car driver to visit a (preferred) fuel pump. Server 9a may also comprise means for registering the vehicles' maintenance state and notify the driver to visit a (preferred) maintenance or repair workshop. More options in the domain of monitoring the hardware of software of vehicles by server 9a are possible.

Communication module 5 also comprises vehicle location means via the terrestrial system 2 or via the (GPS) satellite 7, enabled for exchanging data relative to the vehicles' location. Server 9b, accessable via mediator 1, comprises means for processing said location data. Server 9b is able to offer various services based on registering the vehicles' location. Server 9b can also supply the vehicle's location to the other servers 9a...i, for instance to server 9a, to be able to present to the car driver about the nearest fuel pump or repair shop. Server 9b may also be able to compute -based on their subsequent locations- the speed of the cars.

Server 9c comprises means for planning and scheduling the use of vehicles 4 belonging to a company's car fleet. This option may enable "just-in-time" instead of present permanent car leasing.

Server 9d comprises means for dynamic (self-adapting to changes in traffic streams and capacity fluctuations) route planning. Server 9b may be used to supply data for such "dynamic traffic routing": numbers of cars present in various roadway areas and their speed (flow). Based on those data server 9d may control the traffic flow by taking rerouting measures by means of remote controlled traffic signs, direction boards etc.

Servers 9e comprises means for billing or taxing for the use of the vehicles, dependent on the vehicle's (engine) characteristics (via vehicle control system 6), location, speed, etc. (e.g. via module 5), time-of-the-day, etc. Server 9e may also comprise means for billing vehicle related insurance etc. Below this option has been further elaborated.

The "car box", of course, is enabled for the exchange of voice or data between the vehicles' users and server 9f, comprising means for processing said voice or data from and to the vehicles' users. This option enables professional or private communication between the vehicles' users mutually and with the rest of the world.

Server 9g is enabled to process requests for vehicle parking, in cooperation with location server 9b.

Part of the vehicles 4 may be part of a public transportation system (taxi's, busses etc.). Information about said transportation system may be exchanged with users of vehicles not belonging to the public transportation system. This option enables gearing of the private vehicles to the public transportation system. Server 9h is enabled to process orders from the vehicles' users referring to hiring transportation capacity in a taxi, bus, underground, train etc.

Finally, server 9i is enabled for automatic processing vehicle accidents, enabling sophisticated dynamic planning of rescue capacity etc. For automatic detection of vehicle accidents, server 9i may be triggered by control system 6, for instance when the vehicles "air bags" are actuated.

As stated above, the operation of the system according the invention is further explained by taking the use of servers 9b and 9e. This elaboration is partly based on the contents of applicant's dutch patent application NL........ .

Server 9e may comprise means for billing or taxing for the use of the vehicles, dependent on the vehicle's (engine) characteristics (via vehicle control system 6), location, speed, etc. via module 5), time-of-the-day, etc. Server 9e may also comprise means for billing vehicle related insurance etc. Server 9e may co-operate with server 9b, which is fit for for registering and/or processing the location data of individual cars and for supplying that data to the other servers 9a...i.

The car 4 comprises the communication module (transceiver) 5, which is connected to the vehicle control system 6. The mobile network 2 computes the car's location at each moment. Each car's location can be forwarded -via mediator 1- to server 9b which distributes the location data to (e.g.) server 9e. Server 9e is fit to charge a tax for the use (in real kilometers) of each car, instead of or additional to fixed road tax schemes. Besides for "real kilometer taxation", insurance companies may use server 9e to charge "real kilometer" insurance fees, based on the real use of each car.

For the sake of billing each car has to send a unique car identifier to server 9e. Use may be made of the already available communication identifier (e.g. SIM) of module 5. It may be preferred to have the mediator 1 retrieve the communication identifier, valid within the domain of the mobile communication network 2, and supply a unique car identifier -based on said communication identifier- which is valid within the domain of the IP based network 8. Mediator 1 thus may supply such car identifiers to all servers 9 when needed for their respective services, e.g. for billing such services.

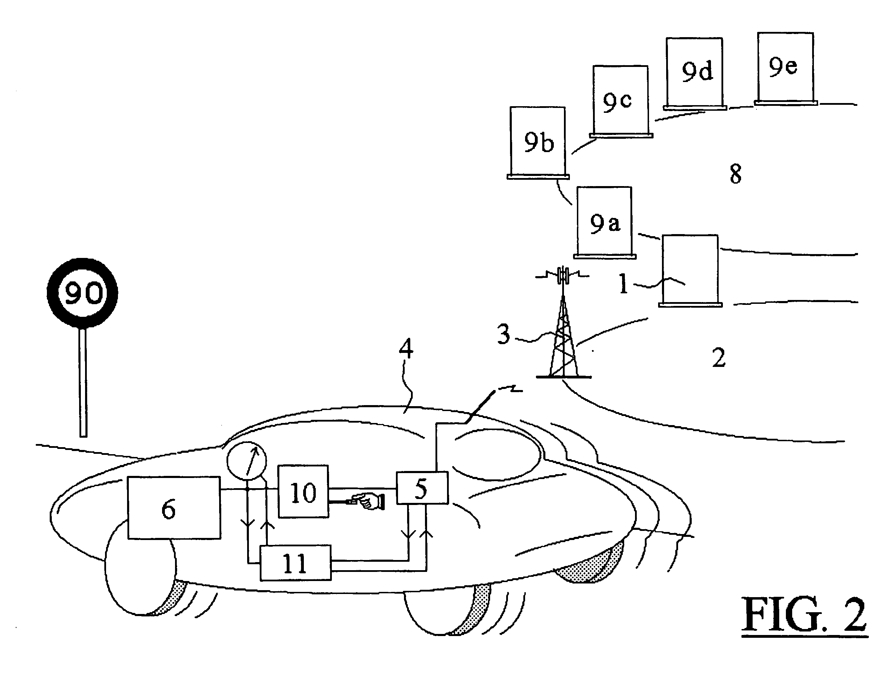

Besides computation, accumulation and billing of "car kilometers", server 9e (or another server, e.g. server 9b) may also be used for "speed related services" like cruise control support and charging for speed offences, as discussed below with reference to figure 2.

Server 9e may be linked to a map database (in the same or another server) comprising data relative to the various roadways and/or traffic areas and the permitted (maximum) speeds there. Server 9e may broadcast to each individual car the local maximum speed in the relevant area (roadway). The local maximum speed value may be downloaded (and updated periodically) to each individual car by means of the link formed by the connection between server 9e, IP network 8, mediator 1, network 2, base station 3 and each car's transceiver 5. The downloaded maximum speed may be compared regularly with the car's actual speed, monitored by it's vehicle control system 6. Both, the downloaded maximum speed and the actual car speed may be displayed to the car driver and an (auditive and/or visual) warning may be given to the driver if the permitted maximum speed is exceeded. An advanced option may be set when using an (advanced) cruise control system 10: the downloaded maximum speed may be input to the cruise control system 10 as reference (desired) speed parameter, resulting in setting and automaticly maintaining a car speed which is equal to the locally permitted maximum speed. When the car enters a roadway area with a different maximum speed or when the maximum speed is changed by the traffic network administrator or the traffic police e.g. in case of local traffic congestion e.g. due to a car accident, fog etc., the car speed could be adapted, by cruise control 10, automatically (or semiautomatically, after requesting the car driver's consent) to the new maximum speed.

The car's equipment and the servers 9b and/or 9e could also be enabled to monitor each individual car's speed and to register and bill each car's speed trespasses. Calculation of the car speed may be executed locally, by means of each car's vehicle control module 6, or centrally, by means of e.g. server 9b, viz. by detecting the car's location at subsequent moments. Speed excessions may be integrated with the excession periods and be fined accordingly.

## Claims

1. A service mediator system for providing services to vehicles and vehicles users in a traffic network, comprising a mediator 1 linked, via local communications means 5 in each of said vehicles and a telecommunications network 2, to each vehicle in the traffic network, and linked, via a server network 8, to a plurality of servers 9a-9i, wherein:
- the mediator 1 serves as a central connection point for accessing services provided by the servers in server network 8;
- the local communication means 5 comprises vehicle location means for exchanging data relative to a current location of said vehicle and for communicating via the mediator with the server network; and,
- the server network comprising a location server 9b for registering location information provided by the vehicle location means in each vehicle in the traffic network at subsequent moments in time so as to define location data allowing the location server or one or more servers connected to said location server to provide services based on, the difference in time or based on the distance driven by a vehicle in the traffic network.

2. Service mediator system according to claim 1, wherein said vehicles comprise means (6) for exchanging data between the relevant vehicles' software or hardware, while at least one of said servers comprises means for processing said data related to the vehicles' software or hardware.

3. Service mediator system according to claim 2, wherein at least one of said servers comprises means for registering the vehicles' fuel consumption.

4. Service mediator system according to claim 2, wherein at least one of said servers comprises means for registering the vehicles' maintenance state.

5. Service mediator system according to claim 1, wherein at least one of said servers comprises means for planning and scheduling the use of the vehicles.

6. Service mediator system according to claim 1, wherein at least one of said servers comprises means for route planning.

7. Service mediator system according to claim 1, wherein at least one of said servers comprises means for billing the use of the vehicles.

8. Service mediator system according to claim 7, wherein at least one of said servers comprises means for billing vehicle related tax.

9. Service mediator system according to claim 7, wherein at least one of said servers comprises means for billing vehicle related insurance.

10. Service mediator system according to claim 1, wherein said local communication means comprise means for the exchange of voice or data with the vehicles' users, while at least one of said servers comprises means for processing said voice or data from and to the vehicles' users.

11. Service mediator system according to claim 10, wherein at least one of said servers processes requests for vehicle parking.

12. Service mediator system according to claim 10, wherein at least part of said vehicles belonging to a public transportation system and wherein information about said transportation system is exchanged with users of vehicles not belonging to the public transportation system.

13. Service mediator system according to claim 10, wherein at least one of said servers processes orders from said users referring to hiring transportation facilities in said vehicles belonging to the public transportation system.

14. Service mediator system according to claim 1 or 2, wherein at least one of said servers automatically processes vehicle accidents.

15. Service mediator system according to claim 1, wherein said mediator (1) functions as a gateway between the telecommunication network (2) and the server network (8).

16. Service mediator system according to claim 1, wherein said mediator (1) functions as a proxy server for caching and/or security purposes.

17. Service mediator system according to claim 1, wherein said mediator (1) functions as a portal for organizing and/or displaying and/or billing the services supplied by the various servers.

18. Service mediator system according to claim 17, registering preferences relating to the various vehicles and/or their users thereby allowing said portal to be "personalized".

19. Service mediator system according to claim 18, wherein a traffic network administrator receives via said portal information about the relevant preferences.

20. Service mediator system according to claim 1, providing peer-to-peer communication between the communication means of vehicles within the same traffic area.

21. Service mediator system according to claim 1, comprising means to set-up ad-hoc local networks comprising the local communication means (5) of adjacent vehicles.

22. Service mediator system according to claim 1, urging the local communication means (5) to set-up a link to an information transmitting system.

23. Service mediator system according to claim 1, used by several different communication operators via different communication networks (2).

24. Service mediator system according to claim 23, providing "hand-over" between said different communication networks.

25. Service mediator system according to claim 1, supporting the "Wireless Application Protocol" (WAP) and/or the "I-mode" protocol.

26. Service mediator system according to claim 25, detecting an ID of the local communication means (5) and to use the applicable protocol in conformity with the detected ID.

27. Service mediator system according to claim 1, detecting an ID of the local communication means (5) and to supply said ID to one of more of said servers.

28. Service mediator system according to claim 25, analyzing the format of data received from the local communication means (5) and to use the applicable protocol in conformity with said data format.

29. Service mediator system according to claim 1, comprising means to adapt data streams in the server network (8) to the behaviour of the data streams in the communication network (2).

30. Service mediator system according to claim 1, comprising at least one server for registering and/or processing the location data of individual vehicles and at least one server comprising means for billing and/or taxing for the use of the vehicles based on the location data.

31. Service mediator system according to claim 30, wherein one of said servers being linked to a map database comprising data relative to the various roadways and/or traffic areas and the permitted speeds there, said server broadcasting to individual vehicles the local maximum speed in the relevant area or roadway.

32. Service mediator system according to claim 31, wherein the downloaded maximum speed being input to a cruise control system as reference speed parameter, resulting in setting and automatically maintaining a vehicle speed which is equal to the locally permitted maximum speed.

33. Service mediator system according to claim 31, wherein one or more servers monitor the speed of individual vehicles and register and bill speed excessions relative to the local maximum speed.

34. Service mediator system according to claim 33, wherein calculation of the vehicle speed being executed locally, by means of the relevant vehicle's control module (6).

35. Service mediator system according to claim 33, wherein calculation of the vehicle speed being executed centrally, by detecting the relevant vehicle's location at subsequent moments.

36. Service mediator system according to claim 33, wherein speed excessions being integrated with the excession periods and be fined accordingly by means of one of said servers.

37. Cruise control system for a vehicle, comprising means (5) for receiving, via a service mediator system (1) according to claim 31, a locally permitted maximum speed value as reference speed parameter for said vehicle, and means for setting and automatically maintaining a vehicle speed which is equal to said maximum speed value.

## Patentansprüche

1. Dienstvermittlersystem zur Bereitstellung von Diensten für Fahrzeuge und Fahrzeugbenutzer in einem Verkehrsnetz, umfassend einen Vermittler 1, der über lokale Kommunikationsmittel 5 in jedem der Fahrzeuge und ein Telekommunikationsnetz 2 mit jedem Fahrzeug in dem Verkehrsnetz verbunden ist und über ein Servernetz 8 mit mehreren Servern 9a-9i verbunden ist, wobei
- der Vermittler 1 als zentraler Verbindungspunkt für den Zugang zu durch die Server in dem Servernetz 8 bereitgestellten Diensten dient;
- die lokalen Kommunikationsmittel 5 Fahrzeuglokalisierungsmittel zum Austauschen von Daten relativ zu einem aktuellen Ort des Fahrzeugs und zum Kommunizieren mit dem Servernetz über den Vermittler umfassen; und
- das Servernetz einen Ortsserver 9b zum Registrieren von durch die Fahrzeuglokalisierungsmittel in jedem Fahrzeug in dem Verkehrsnetz an nachfolgenden Zeitpunkten bereitgestellten Ortsinformationen umfaßt, um so Ortsdaten zu definieren, die es dem Ortsserver oder einem oder mehreren mit dem Ortsserver verbundenen Servern ermöglichen, Dienste auf der Basis der zeitlichen Differenz oder auf der Basis der von einem Fahrzeug in dem Verkehrsnetz gefahrenen Distanz bereitzustellen.

2. Dienstvermittlersystem nach Anspruch 1, wobei die Fahrzeuge Mittel (6) zum Austauschen von Daten zwischen Software oder Hardware der relevanten Fahrzeuge umfassen, während mindestens einer der Server Mittel zum Verarbeiten der die Software oder Hardware der Fahrzeuge betreffenden Daten umfaßt.

3. Dienstvermittlersystem nach Anspruch 2, wobei mindestens einer der Server Mittel zum Registrieren des Kraftstoffverbrauchs der Fahrzeuge umfaßt.

4. Dienstvermittlersystem nach Anspruch 2, wobei mindestens einer der Server Mittel zum Registrieren des Wartungszustands der Fahrzeuge umfaßt.

5. Dienstvermittlersystem nach Anspruch 1, wobei mindestens einer der Server Mittel zum Planen und Einteilen der Benutzung der Fahrzeuge umfaßt.

6. Dienstvermittlersystem nach Anspruch 1, wobei mindestens einer der Server Mittel zur Routenplanung umfaßt.

7. Dienstvermittlersystem nach Anspruch 1, wobei mindestens einer der Server Mittel zur Inrechnungstellung der Benutzung der Fahrzeuge umfaßt.

8. Dienstvermittlersystem nach Anspruch 7, wobei mindestens einer der Server Mittel zur Inrechnungstellung von fahrzeugbezogenen Steuern umfaßt.

9. Dienstvermittlersystem nach Anspruch 7, wobei mindestens einer der Server Mittel zur Inrechnungstellung von fahrzeugbezogener Versicherung umfaßt.

10. Dienstvermittlersystem nach Anspruch 1, wobei die lokalen Kommunikationsmittel Mittel zum Austausch von Sprache oder Daten mit Benutzern der Fahrzeuge umfassen, wobei mindestens einer der Server Mittel zum Verarbeiten der Sprache oder Daten von und zu Benutzern der Fahrzeuge umfaßt.

11. Dienstvermittlersystem nach Anspruch 10, wobei mindestens einer der Server Fahrzeugparkanforderungen verarbeitet.

12. Dienstvermittlersystem nach Anspruch 10, wobei mindestens ein Teil der Fahrzeuge zu einem öffentlichen Transportsystem gehört und wobei Informationen über das Transportsystem mit Benutzern von Fahrzeugen, die nicht zu dem öffentlichen Transportsystem gehören, ausgetauscht werden.

13. Dienstvermittlersystem nach Anspruch 10, wobei mindestens einer der Server Aufträge von den Benutzern verarbeitet, die sich auf das Mieten von Transporteinrichtungen in den zu dem öffentlichen Transportsystem gehörenden Fahrzeugen beziehen.

14. Dienstvermittlersystem nach Anspruch 1 oder 2, wobei mindestens einer der Server Fahrzeugunfälle automatisch verarbeitet.

15. Dienstvermittlersystem nach Anspruch 1, wobei der Vermittler (1) als Gateway zwischen dem Telekommunikationsnetz (2) und dem Servernetz (8) fungiert.

16. Dienstvermittlersystem nach Anspruch 1, wobei der Vermittler (1) als Proxy-Server für Cache- und/oder Sicherheitszwecke fungiert.

17. Dienstvermittlersystem nach Anspruch 1, wobei der Vermittler (1) als Portal zum Organisieren und/oder Anzeigen und/oder Inrechnungstellen der von den verschiedenen Servern gelieferten Dienste fungiert.

18. Dienstvermittlersystem nach Anspruch 17, das Präferenzen in bezug auf die verschiedenen Fahrzeuge und/oder ihre Benutzer registriert, wodurch das Portal "personalisiert" werden kann.

19. Dienstvermittlersystem nach Anspruch 18, wobei ein Verkehrsnetzadministrator die Portalinformationen über die relevanten Präferenzen erhält.

20. Dienstvermittlersystem nach Anspruch 1, das Peer-to-Peer-Kommunikation zwischen den Kommunikationsmitteln von Fahrzeugen in demselben Verkehrsbereich bereitstellt.

21. Dienstvermittlersystem nach Anspruch 1, umfassend Mittel zum Aufbauen von lokalen ad-hoc-Netzen, die die lokalen Kommunikationsmittel (5) benachbarter Fahrzeuge umfassen.

22. Dienstvermittlersystem nach Anspruch 1, das die lokalen Kommunikationsmittel (5) dazu drängt, eine Verbindung mit einem Informationsübertragungssystem aufzubauen.

23. Dienstvermittlersystem nach Anspruch 1, das von mehreren verschiedenen Kommunikationsbetreibern über verschiedene Kommunikationsnetze (2) benutzt wird.

24. Dienstvermittlersystem nach Anspruch 23, das "Handover" zwischen verschiedenen Kommunikationsnetzen bereitstellt.

25. Dienstvermittlersystem nach Anspruch 1, das das "Wireless Application Protocol" (WAP) und/oder das "I-mode"-Protokoll unterstützt.

26. Dienstvermittlersystem nach Anspruch 25, das eine ID der lokalen Kommunikationsmittel (5) detektiert, und zur Verwendung des geltenden Protokolls im Einklang mit der detektierten ID.

27. Dienstvermittlersystem nach Anspruch 1, das eine ID der lokalen Kommunikationsmittel (5) detektiert, und zum Zuführen der ID zu einem oder mehreren der Server.

28. Dienstvermittlersystem nach Anspruch 25, das das Format von aus den lokalen Kommunikationsmitteln (5) empfangenen Daten analysiert, und zur Verwendung des geltenden Protokolls im Einklang mit dem Datenformat.

29. Dienstvermittlersystem nach Anspruch 1, umfassend Mittel zum Anpassen von Datenströmen in dem Servernetz (8) an das Verhalten der Datenströme in dem Kommunikationsnetz (2).

30. Dienstvermittlersystem nach Anspruch 1, umfassend mindestens einen Server zum Registrieren und/oder Verarbeiten der Ortsdaten individueller Fahrzeuge und mindestens einen Server mit Mitteln zur Inrechnungstellung und/oder Besteuerung der Benutzung der Fahrzeuge auf der Basis der Ortsdaten.

31. Dienstvermittlersystem nach Anspruch 30, wobei einer der Server mit einer Kartendatenbank verbunden ist, die Daten relativ zu den verschiedenen Straßen und/oder Verkehrsbereichen und den dort zugelassenen Geschwindigkeiten umfaßt, wobei der Server die lokale Höchstgeschwindigkeit in dem relevanten Bereich oder in der relevanten Straße zu individuellen Fahrzeugen ausstrahlt.

32. Dienstvermittlersystem nach Anspruch 31, wobei die heruntergeladene Höchstgeschwindigkeit als Referenzgeschwindigkeitsparameter in ein Tempostatsystem eingegeben wird, was zu der Einstellung und automatischen Aufrechterhaltung einer Fahrzeuggeschwindigkeit führt, die gleich der lokal zugelassenen Höchstgeschwindigkeit ist.

33. Dienstvermittlersystem nach Anspruch 31, wobei ein oder mehrere Server die Geschwindigkeit individueller Fahrzeuge überwachen und Geschwindigkeitsüberschreitungen relativ zu der lokalen Höchstgeschwindigkeit registrieren und in Rechnung stellen.

34. Dienstvermittlersystem nach Anspruch 33, wobei die Berechnung der Fahrzeuggeschwindigkeit lokal mittels des Steuermoduls (6) des relevanten Fahrzeugs lokal ausgeführt wird.

35. Dienstvermittlersystem nach Anspruch 33, wobei die Berechnung der Fahrzeuggeschwindigkeit zentral durch Detektieren des Orts des relevanten Fahrzeugs zu nachfolgenden Zeitpunkten ausgeführt wird.

36. Dienstvermittlersystem nach Anspruch 33, wobei Geschwindigkeitsüberschreitungen mit den Überschreitungszeiträumen integriert sind und entsprechend mittels eines der Server bestraft werden.

37. Tempostatsystem für ein Fahrzeug, umfassend Mittel (5) zum Empfangen eines lokal zugelassenen Höchstgeschwindigkeitswerts als Referenzgeschwindigkeitsparameter für das Fahrzeug über ein Dienstvermittlersystem (1) nach Anspruch 31 und Mittel zum Einstellen und automatischen Aufrechterhalten einer Fahrzeuggeschwindigkeit, die gleich dem Höchstgeschwindigkeitswerts ist.

## Revendications

1. Système de médiation de services pour fournir des services à des véhicules et utilisateurs de véhicules dans un réseau de circulation, comprenant un médiateur 1 relié, par le biais d'un moyen de communications local 5 dans chacun desdits véhicules et d'un réseau de télécommunications 2, à chaque véhicule dans le réseau de circulation, et relié, par l'intermédiaire d'un réseau de serveurs 8, à une pluralité de serveurs 9a à 9i, dans lequel :
- le médiateur 1 sert de point de connexion central pour accéder aux services fournis par les serveurs dans le réseau de serveurs 8 ;
- le moyen de communication local 5 comprend un moyen de localisation de véhicule pour échanger des données relatives à une position courante dudit véhicule et pour communiquer par l'intermédiaire du médiateur avec le réseau de serveurs ; et,
- le réseau de serveurs comprenant un serveur de localisation 9b pour enregistrer des informations de position fournies par le moyen de localisation de véhicule dans chaque véhicule dans le réseau de circulation à des instants postérieurs de façon à définir des données de position permettant au serveur de localisation ou à un ou plusieurs serveurs connectés audit serveur de localisation de fournir des services en fonction de la différence de temps ou en fonction de la distance parcourue par un véhicule dans le réseau de circulation.

2. Système de médiation de services selon la revendication 1, dans lequel lesdits véhicules comprennent un moyen (6) pour échanger des données entre les logiciels ou matériels des véhicules pertinents, tandis qu'au moins un desdits serveurs comprend un moyen pour traiter lesdites données liées auxdits logiciels ou matériels des véhicules.

3. Système de médiation de services selon la revendication 2, dans lequel au moins l'un desdits serveurs comprend un moyen d'enregistrement de la consommation de carburant des véhicules.

4. Système de médiation de services selon la revendication 2, dans lequel au moins l'un desdits serveurs comprend un moyen d'enregistrement de l'état d'entretien des véhicules.

5. Système de médiation de services selon la revendication 1, dans lequel au moins l'un desdits serveurs comprend un moyen de planification et de programmation de l'utilisation des véhicules.

6. Système de médiation de services selon la revendication 1, dans lequel au moins l'un desdits serveurs comprend un moyen de planification de routes.

7. Système de médiation de services selon la revendication 1, dans lequel au moins l'un desdits serveurs comprend un moyen de facturation de l'utilisation des véhicules.

8. Système de médiation de services selon la revendication 7, dans lequel au moins l'un desdits serveurs comprend un moyen de facturation d'une taxe de véhicule.

9. Système de médiation de services selon la revendication 7, dans lequel au moins l'un desdits serveurs comprend un moyen de facturation d'une assurance de véhicule.

10. Système de médiation de services selon la revendication 1, dans lequel ledit moyen de communication local comprend un moyen d'échange de voix ou de données avec les utilisateurs des véhicules, tandis qu'au moins l'un desdits serveurs comprend un moyen de traitement de ladite vois ou desdites données venant depuis et allant vers les utilisateurs des véhicules.

11. Système de médiation de services selon la revendication 10, dans lequel au moins l'un desdits serveurs traite des requêtes de stationnement de véhicule.

12. Système de médiation de services selon la revendication 10, dans lequel au moins une partie desdits véhicules appartiennent à un système de transport public et dans lequel les informations au sujet dudit système de transport sont échangées avec des utilisateurs de véhicules n'appartenant pas au système de transport public.

13. Système de médiation de services selon la revendication 10, dans lequel au moins l'un desdits serveurs traite des commandes provenant desdits utilisateurs se rapportant à la location d'installations de transport dans lesdits véhicules appartenant au système de transport public.

14. Système de médiation de services selon la revendication 1 ou 2, dans lequel au moins l'un desdits serveurs traite automatiquement les accidents de véhicules.

15. Système de médiation de services selon la revendication 1, dans lequel ledit médiateur (1) sert de passerelle entre le réseau de télécommunication (2) et le réseau de serveurs (8).

16. Système de médiation de services selon la revendication 1, dans lequel ledit médiateur (1) sert de serveur mandataire à des fins de mise en antémémoire et/ou de sécurité.

17. Système de médiation de services selon la revendication 1, dans lequel ledit médiateur (1) sert de portail pour organiser et/ou afficher et/ou facturer les services fournis par les divers serveurs.

18. Système de médiation de services selon la revendication 17, enregistrant les préférences concernant les divers véhicules et/ou leurs utilisateurs permettant ainsi de "personnaliser" ledit portail.

19. Système de médiation de services selon la revendication 18, dans lequel un administrateur du réseau de circulation reçoit lesdites informations de portail au sujet des préférences pertinentes.

20. Système de médiation de services selon la revendication 1, fournissant des communications entre homologues entre les moyens de communication de véhicules situés dans la même zone de circulation.

21. Système de médiation de services selon la revendication 1, comprenant un moyen d'établissement de réseaux locaux ad hoc comprenant les moyens de communication locaux (5) de véhicules adjacents.

22. Système de médiation de services selon la revendication 1, incitant le moyen de communication local (5) à établir une liaison avec un système émetteur d'informations.

23. Système de médiation de services selon la revendication 1, utilisé par plusieurs communicateurs différents par l'intermédiaire de réseaux de communication différents (2).

24. Système de médiation de services selon la revendication 23, assurant un "transfert" entre lesdits réseaux de communication différents.

25. Système de médiation de services selon la revendication 1, supportant le "Wireless Application Protocol" (WAP) et/ou le protocole "I-mode".

26. Système de médiation de services selon la revendication 25, détectant une ID du moyen de communication local (5) et utilisant le protocole applicable conformément à l'ID détectée.

27. Système de médiation de services selon la revendication 1, détectant une ID du moyen de communication local (5) et fournissant ladite ID à un ou plusieurs desdits serveurs.

28. Système de médiation de services selon la revendication 25, analysant le format des données reçues depuis le moyen de communication local (5) et utilisant le protocole applicable conformément audit format de données.

29. Système de médiation de services selon la revendication 1, comprenant un moyen d'adaptation de trains de données dans le réseau de serveurs (8) au comportement des trains de données dans le réseau de communication (2).

30. Système de médiation de services selon la revendication 1, comprenant au moins un serveur pour enregistrer et/ou traiter les données de position de véhicules individuels et au moins un serveur comprenant un moyen de facturation et/ou imposition relativement à l'utilisation des véhicules en fonction des données de position.

31. Système de médiation de services selon la revendication 30, dans lequel l'un desdits serveurs est relié à une base de données de carte comprenant des données relatives aux diverses voies routières et/ou zones de circulation et les vitesses autorisées dans celles-ci, ledit serveur diffusant aux véhicules individuels la vitesse locale maximum dans la zone ou la voie routière particulière.

32. Système de médiation de services selon la revendication 31, dans lequel la vitesse maximum téléchargée est entrée dans un régulateur de vitesse automatique comme paramètre de vitesse de référence, entraînant le réglage et le maintien automatique d'une vitesse de véhicule qui est égale à la vitesse maximum autorisée localement.

33. Système de médiation de services selon la revendication 31, dans lequel un ou plusieurs serveurs contrôlent la vitesse de véhicules individuels et enregistrent et facturent les excès de vitesse par rapport à la vitesse maximum locale.

34. Système de médiation de services selon la revendication 33, dans lequel le calcul de la vitesse de véhicule est exécuté localement, au moyen du module de commande du véhicule pertinent (6).

35. Système de médiation de services selon la revendication 33, dans lequel le calcul de la vitesse de véhicule est exécuté centralement, en détectant la position du véhicule pertinent à des instants postérieurs.

36. Système de médiation de services selon la revendication 33, dans lequel les excès de vitesse sont intégrés aux périodes d'excès et sont pénalisés en conséquence au moyen de l'un desdits serveurs.

37. Régulateur de vitesse automatique pour un véhicule, comprenant un moyen (5) pour recevoir, par l'intermédiaire d'un système de médiation de services (1) selon la revendication 31, une valeur de vitesse maximum autorisée localement comme paramètre de vitesse de référence dudit véhicule, et un moyen pour régler et maintenir automatiquement une vitesse de véhicule qui est égale à ladite valeur de vitesse maximum.
